(19) Europäisches Patentamt
European Patent Office
Office européen des brevets

(11) **EP 2 671 313 B1**

(12) **EUROPÄISCHE PATENTSCHRIFT**

(45) Veröffentlichungstag und Bekanntmachung des Hinweises auf die Patenterteilung:
**25.02.2015 Patentblatt 2015/09**

(21) Anmeldenummer: **11805058.2**

(22) Anmeldetag: **28.12.2011**

(51) Int Cl.:
*H02M 3/335* (2006.01)  *H02M 3/28* (2006.01)
*H02M 3/337* (2006.01)  *H02M 1/00* (2007.01)

(86) Internationale Anmeldenummer:
**PCT/EP2011/074151**

(87) Internationale Veröffentlichungsnummer:
**WO 2012/103994 (09.08.2012 Gazette 2012/32)**

(54) **GEGENTAKTWANDLER UND MODULATIONSVERFAHREN ZUM ANSTEUERN EINES GEGENTAKTWANDLERS**

PUSH-PULL CONVERTER, AND MODULATION METHOD FOR CONTROLLING A PUSH-PULL CONVERTER

TRANSFORMATEUR PUSH-PULL ET PROCÉDÉ DE MODULATION POUR COMMANDER UN TRANSFORMATEUR PUSH-PULL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.02.2011 DE 102011003576**

(43) Veröffentlichungstag der Anmeldung:
**11.12.2013 Patentblatt 2013/50**

(73) Patentinhaber: **Robert Bosch GmbH**
**70442 Stuttgart (DE)**

(72) Erfinder:
• **VAN BOOVEN, Christoph**
  **74354 Besigheim (DE)**
• **HEMBACH, Florian**
  **A-1100 Wien (AT)**

(56) Entgegenhaltungen:
**DE-U1-202004 002 305    US-B1- 6 452 815**

**Beschreibung**

Die Erfindung betrifft einen Gegentaktwandler und ein Modulationsverfahren zum Ansteuern eines Gegentaktwandlers.

Stand der Technik

Elektrofahrzeuge weisen neben dem Antriebssystem häufig ein Gerät zum Aufladen der Batterie auf. Ein solches Ladegerät ermöglicht in einfacher Weise das Aufladen des elektrischen Energiespeichers des Elektrofahrzeugs an jeder beliebigen Steckdose. Das Ladegerät erzeugt hierzu aus dem öffentlichen Niederspannungsnetz mit Wechselspannung eine Gleichspannung zum Laden der Traktionsbatterie.

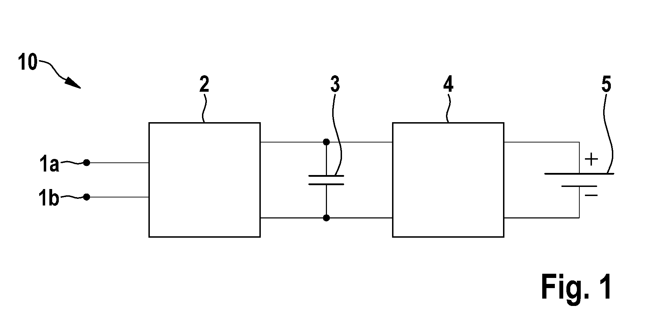

Eine Möglichkeit zur Ausgestaltung eines Ladegeräts 10 für ein Fahrzeug mit Elektroantrieb ist in Fig. 1 gezeigt. Das Ladegerät 10 weist eine Leistungsfaktorkorrekturstufe 2 (PFC, "power factor correction") auf, welche mit einem Außenleiter 1 a und einem Neutralleiter 1 b eines öffentlichen Niederspannungsnetzes verbunden werden. Die Leistungsfaktorkorrekturstufe 2 ist dazu ausgelegt, sinusförmige Ströme aus dem Versorgungsnetz zu entnehmen und über einen Zwischenkreis mit einem Zwischenkreiskondensator 3 zur Glättung der aus dem Wechselstromnetz entnommenen pulsierenden Leistung an einen Gleichspannungswandler 4 weiterzugeben. Der Gleichspannungswandler 4 ist dazu ausgelegt, eine entsprechende Gleichspannung zum Laden der Batterie 5 des Fahrzeugs mit Elektroantrieb bereitzustellen.

Aus Sicherheitsgründen wird für das Ladegerät 10 eine galvanische Trennung zwischen dem öffentlichen Versorgungsnetz und dem Fahrzeug gefordert. Häufig wird hierzu der Gleichspannungswandler 4 als Gegentaktwandler 4 ausgestaltet, um diese galvanische Trennung zu schaffen.

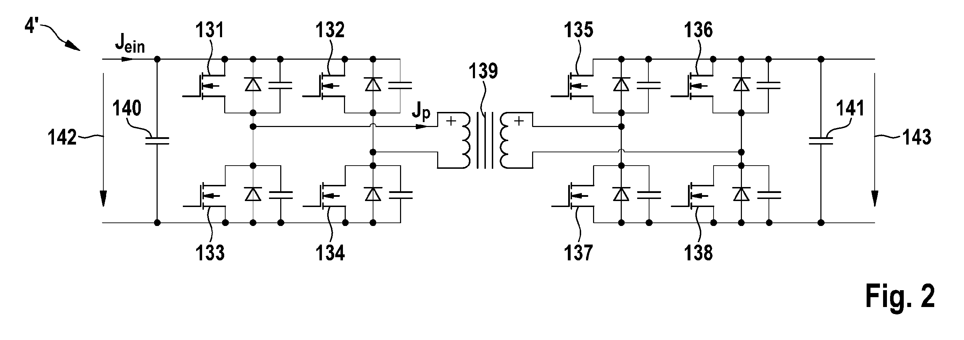

Eine Möglichkeit, einen Gegentaktwandler auszugestalten, ist schematisch in Fig. 2 gezeigt. Der Gegentaktwandler 4' in Fig. 2 ist ein galvanisch isolierender bidirektionaler Gleichspannungswandler mit einer sogenannten Dual-Active-Bridge-Topologie. Dabei ist in einer primärseitigen Eingangswandlerschaltung eine Vollbrückenschaltung aus den Schalteinrichtungen 131, 132, 133, 134 realisiert, die über einen Glättungskondensator 140 eine Eingangsgleichspannung 142 über einen Transformator 139 an eine Ausgangswandlerschaltung weitergibt. Die Ausgangswandlerschaltung ist ebenfalls als Vollbrückenschaltung mit den Schalteinrichtungen 135, 136, 137, 138 ausgestaltet und kann über einen Glättungskondensator 141 eine Ausgangsgleichspannung 143 bereitstellen.

Zur Ansteuerung des Gegentaktwandlers 4' existieren verschiedene Modulationsverfahren, unter anderem das Trapezmodulationsverfahren, mit welchem eine Batterieladeleistung über einen weiten Leistungsbereich von etwa 400 W bis 3300 W eingestellt werden kann. Bei dem Trapezmodulationsverfahren nimmt der Strom $I_p$ durch den Transformator 139 einen trapezförmigen Verlauf an, wobei in den Plateauphasen des trapezoiden Verlaufs des Stroms $I_p$ sowie einer anschließenden Phase einer abnehmenden Stromflanke ein Leistungsübertrag an die Ausgangswandlerschaltung stattfinden kann. Die zu übertragende Leistung lässt sich dabei über die Höhe des Plateaus einstellen.

Derartige Gegentaktwandler 4' und entsprechende Modulationsverfahren zur Ansteuerung der Gegentaktwandler 4' sind beispielsweise in den Druckschriften Krismer, F., Round, S., Kolar, J. W., Performance Optimization of a High Current Dual Active Bridge with a Wide Operating Voltage Range, Proceedings of the 37th Power Electronics Specialists Conference, Jeju, Korea, June 18 - 22, 2006 und Krismer, F., Biela, J., Kolar, J. W., A Comparative Evaluation of Isolated Bi-directional DC/DC Converters with Wide Input and Output Voltage Range, Conference Record of the 2005 IEEE Industry Applications Conference, 40th IAS Annual Meeting (IAS'05), Hong Kong, Oct. 2 - 6, 2005 beschrieben.

Beim Trapezmodulationsverfahren können Leistungsverluste durch Schaltvorgänge auftreten, die jeweils in einer Hälfte der Eingangs- bzw. Ausgangsbrücke realisiert werden. Dadurch ist ein geeignetes und komplexes Ansteuerverfahren mit zeitkritischer Stromerfassung zur Minimierung der Schaltverluste notwendig Anspruch 1 ist durch US-B1-6452815 abgegrenzt.

Offenbarung der Erfindung

Die vorliegende Erfindung schafft einen Gegentaktwandler, mit einer primärseitigen Eingangswandlerschaltung mit einer Vielzahl von primärseitigen Schalteinrichtungen in einer Vollbrückenschaltung, welche dazu ausgelegt ist, eine Eingangsgleichspannung in eine erste Wechselspannung umzusetzen, einem Transformator mit einer primärseitigen Wicklung und einer sekundärseitigen Wicklung, welcher dazu ausgelegt ist, die erste Wechselspannung an der primärseitigen Wicklung zu empfangen und eine zweite Wechselspannung an der sekundärseitigen Wicklung zu erzeugen, und einer sekundärseitigen Ausgangswandlerschaltung, welche dazu ausgelegt ist, die zweite Wechselspannung in eine Ausgangsgleichspannung umzusetzen, mit einer ersten Halbbrückenschaltung, welche eine erste sekundärseitige Schalteinrichtung, eine zweite sekundärseitige Schalteinrichtung und einen ersten Mittelabgriff, welcher mit einem ersten Anschluss der sekundärseitigen Wicklung verbunden ist, umfasst, und einer zweiten Halbbrückenschaltung, welche eine erste sekundärseitige Diode, eine zweite sekundärseitige Diode und einen zweiten Mittelabgriff, welcher mit einem zweiten Anschluss der sekundärseitigen Wicklung verbunden ist, umfasst, wobei die zweite Halbbrückenschaltung keine schaltbare Komponente umfasst.

Vorzugsweise können die primärseitigen Schalteinrichtungen, die erste sekundärseitigen Schalteinrichtung und die zweite sekundärseitige Schalteinrichtung MOSFETs, IGBTs, JFETs, BJTs, GTOs, ESBTs, SiC-Kaskoden, Thyristorschaltungen mit Löschthyristoren oder ähnliche Schalter umfassen.

Den primärseitigen Schalteinrichtungen, der ersten sekundärseitigen Schalteinrichtung und/oder der zweiten sekundärseitigen Schalteinrichtung kann in einer vorteilhaften Ausführungsform jeweils ein Kondensator parallel geschaltet sein.

Vorteilhafterweise kann den primärseitigen Schalteinrichtungen, der ersten sekundärseitigen Schalteinrichtung und/oder der zweiten sekundärseitigen Schalteinrichtung jeweils eine Diode anti-parallel geschaltet sein.

Die Erfindung schafft weiterhin ein Modulationsverfahren zum Ansteuern eines erfindungsgemäßen Gegentaktwandlers, mit den Schritten des Anlegens einer primärseitigen positiven Spannung an die primärseitige Wicklung des Transformators bei gleichzeitigem Kurzschließen der sekundärseitigen Wicklung über die zweite sekundärseitige Schalteinrichtung und die zweite sekundärseitige Diode während eines ersten Zeitabschnitts eines Modulationszyklus, des Öffnens der zweiten sekundärseitigen Schalteinrichtung und Schließen der ersten sekundärseitigen Schalteinrichtung zum Übertragen von Leistung von der Eingangswandlerschaltung in die Ausgangswandlerschaltung während eines zweiten Zeitabschnitts des Modulationszyklus, des Kurzschließens der primärseitigen Wicklung während eines dritten Zeitabschnitts des Modulationszyklus, und des Anlegens einer primärseitigen negativen Spannung an die primärseitige Wicklung des Transformators, nachdem der Stromfluss durch die primärseitige Wicklung des Transformators die Fließrichtung umkehrt.

In einer vorteilhaften Ausführungsform kann das Modulationsverfahren weiterhin die Schritte des Anlegens der primärseitigen negativen Spannung an die primärseitige Wicklung des Transformators bei gleichzeitigem Kurzschließen der sekundärseitigen Wicklung über die erste sekundärseitige Schalteinrichtung und die erste sekundärseitige Diode während eines vierten Zeitabschnitts des Modulationszyklus, des Öffnens der ersten sekundärseitigen Schalteinrichtung und Schließen der zweiten sekundärseitigen Schalteinrichtung zum Übertragen von Leistung von der Eingangswandlerschaltung in die Ausgangswandlerschaltung während eines fünften Zeitabschnitts des Modulationszyklus, des Kurzschließens der primärseitigen Wicklung während eines sechsten Zeitabschnitts des Modulationszyklus, und des Anlegens einer primärseitigen positiven Spannung an die primärseitige Wicklung des Transformators, nachdem der Stromfluss durch die primärseitige Wicklung des Transformators die Fließrichtung umkehrt, umfassen.

In einer Ausführungsform des erfindungsgemäßen Modulationsverfahrens kann der Schritt des Anlegens der primärseitigen negativen Spannung um eine vorbestimmte Zeitspanne, nachdem der um den Magnetisierungsstrom bereinigte Stromfluss durch die primärseitige Wicklung des Transformators die Fließrichtung umkehrt, verzögert werden.

Vorteile der Erfindung

Eine Idee der Erfindung ist es, die Anzahl der schaltbaren Komponenten in einem Gegentaktwandler zu reduzieren. Dies lässt sich durch die Verwendung eines geeigneten Modulationsverfahrens erreichen.

Durch die Verringerung der schaltbaren Komponenten lässt sich gleichzeitig eine Vereinfachung der Ansteuerung des Gegentaktwandlers erzielen, da der messtechnische Aufwand zur Erkennung exakter Umschaltzeitpunkte sinkt. Außerdem ist das erfindungsgemäße Modulationsverfahren robust gegenüber Schwankungen des eingestellten Arbeitspunktes, beispielsweise durch Veränderung der angekoppelten Ausgangslast. Überdies sind mit der erfindungsgemäßen Topologie des Gegentaktwandlers bei Schwankungen der angekoppelten Ausgangslast kritische Zustände mit erhöhter Beanspruchung der Schaltungskomponenten ausgeschlossen, so dass keine weiteren Sicherungsmaßnahmen getroffen werden müssen.

Ein sehr großer Vorteil des erfindungsgemäßen Gegentaktwandlers besteht darin, dass er mit dem erfindungsgemäßen Modulationsverfahren sehr effizient im Teillastbereich eingesetzt werden kann, da der weich schaltende Betrieb der Schalteinrichtungen auch bei kleinsten Leistungen durch Verlängerung der stromlosen Zeitspanne aufrechterhalten werden kann, so dass ein Betrieb im niedrigen Ausgangsleistungsbereich effizient möglich wird.

Weitere Merkmale und Vorteile von Ausführungsformen der Erfindung ergeben sich aus der nachfolgenden Beschreibung mit Bezug auf die beigefügten Zeichnungen.

Kurze Beschreibung der Zeichnungen

Es zeigen:

Fig. 1     eine schematische Darstellung eines Ladegeräts für eine Batterie;

Fig. 2     eine schematische Darstellung eines herkömmlichen bidirektionalen Gleichspannungswandlers;

Fig. 3    eine schematische Darstellung eines Gegentaktwandlers gemäß einer Ausführungsform der Erfindung;

Fig. 3a    eine schematische Darstellung einer Schalteinrichtung eines Gegentaktwandlers gemäß einer weiteren Ausführungsform der Erfindung;

Fig. 3b    eine schematische Darstellung einer Schalteinrichtung eines Gegentaktwandlers gemäß einer weiteren Ausführungsform der Erfindung;

Fig. 3c    eine schematische Darstellung einer Diode eines Gegentaktwandlers gemäß einer weiteren Ausführungsform der Erfindung;

Fig. 3d    eine schematische Darstellung einer beispielhaften Ausgestaltung eines Gegentaktwandlers gemäß einer weiteren Ausführungsform der Erfindung;

Fig. 4    ein zeitliches Verlaufsdiagramm von Ansteuersignalen eines Modulationsverfahrens zum Ansteuern eines Gegentaktwandlers gemäß einer weiteren Ausführungsform der Erfindung;

Fig. 5a    ein Diagramm mit Steuerkurven für ein Modulationsverfahrens zum Ansteuern eines Gegentaktwandlers gemäß einer weiteren Ausführungsform der Erfindung; und

Fig. 5b    ein Diagramm mit Steuerkurven für ein Modulationsverfahrens zum Ansteuern eines Gegentaktwandlers gemäß einer weiteren Ausführungsform der Erfindung.

Ausführungsformen der Erfindung

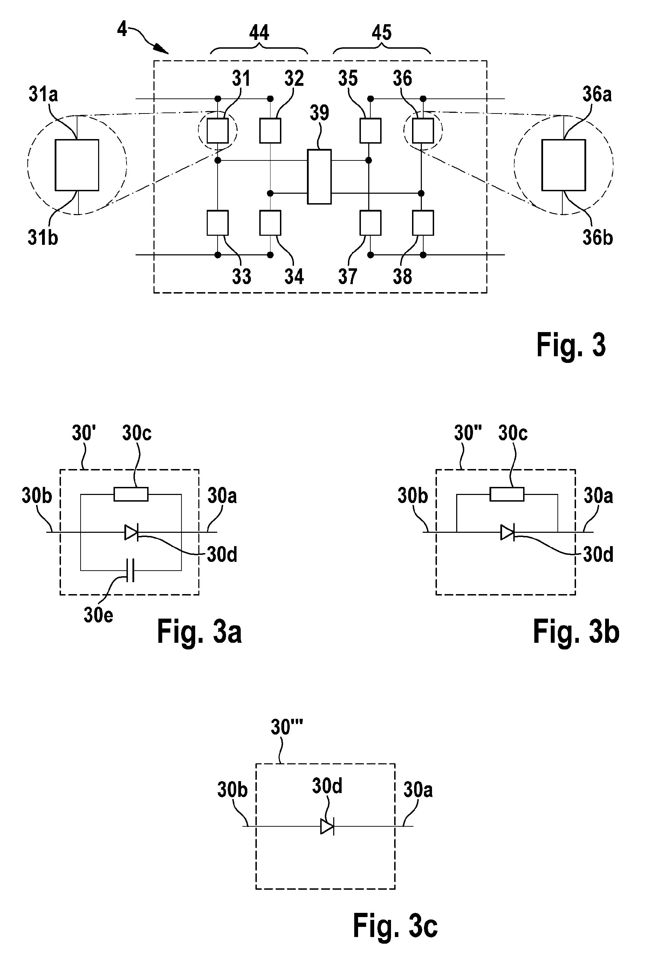

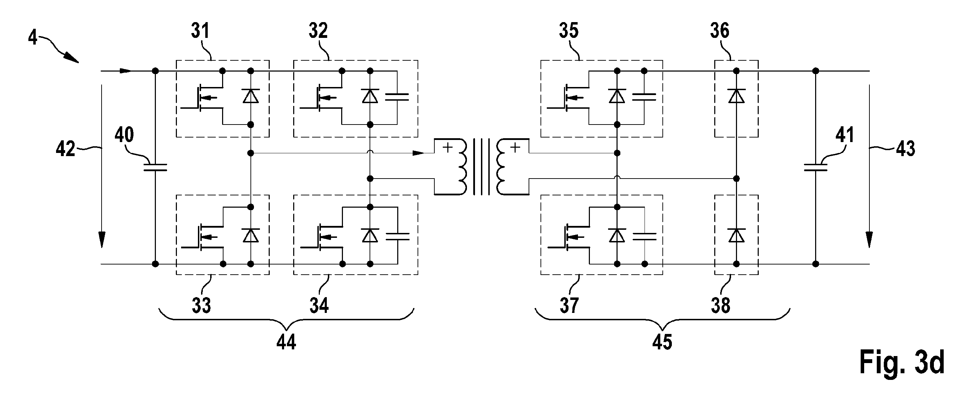

Fig. 3 zeigt eine schematische Darstellung eines Gegentaktwandlers 4 gemäß einer Ausführungsform der Erfindung. Der Gegentaktwandler 4 umfasst eine primärseitige Eingangswandlerschaltung 44 mit den ersten Schalteinrichtungen 31, 32, 33 und 34. Die Eingangswandlerschaltung 44 ist dazu ausgelegt, eine Eingangsgleichspannung, welche über der Eingangswandlerschaltung 44 abfällt, in eine primärseitige Wechselspannung in eine primärseitige Wicklung eines Transformators 39 umzusetzen. Die Eingangswandlerschaltung 44 ist ähnlich wie im Gegentaktwandler 4' aus Fig. 2 in einer Vollbrückenschaltung aufgebaut, so dass die Schalteinrichtungen 31 und 33 eine erste primärseitige Halbbrücke mit Mittelabgriff bilden, der mit einem ersten Anschluss der primärseitigen Wicklung des Transformators 39 verbunden ist, und die Schalteinrichtungen 32 und 34 eine zweite primärseitige Halbbrücke mit Mittelabgriff bilden, der mit einem zweiten Anschluss der primärseitigen Wicklung des Transformators 39 verbunden ist. Es kann vorgesehen sein, zwischen einer der primärseitigen Halbbrücken und dem jeweiligen Anschluss der primärseitigen Wicklung des Transformators 39 eine externe Streuinduktivität anzuordnen.

Der Gegentaktwandler 4 umfasst weiterhin sekundärseitig eine Ausgangswandlerschaltung 45 mit ersten sekundärseitigen Schalteinrichtungen 35 und 37, die in einer ersten sekundärseitigen Halbbrückenschaltung mit einem Mittelabgriff, der mit einem ersten Anschluss der sekundärseitigen Wicklung des Transformators 39 verbunden ist, zusammen geschaltet sind. Die Ausgangswandlerschaltung 45 umfasst weiterhin Schaltungsbauteile 36 und 38, welche in einer zweiten sekundärseitigen Halbbrückenschaltung mit einem Mittelabgriff, der mit einem zweiten Anschluss der sekundärseitigen Wicklung des Transformators 39 verbunden ist, zusammen geschaltet sind.

In der Fig. 3 sind Details der Schaltungsbauteile 31 und 36 beispielhaft in den gestrichelt umrandeten Kreisen gezeigt. Die Schaltungseinrichtung 31 umfasst beispielsweise einen ersten Anschluss 31a und einen zweiten Anschluss 31b. Das Schaltungsbauteil 36 umfasst einen ersten Anschluss 36a und einen zweiten Anschluss 36b. Ähnliches gilt für die übrigen Schaltungsbauteile 32, 33, 34, 35, 37 und 38, wobei jeweils der in der schematischen Darstellung nach oben weisende Anschluss der mit dem Bezugssuffix "a" und der in der schematischen Darstellung nach unten weisende Anschluss mit dem Bezugssuffix "b" bezeichnet ist. Die Schaltungsbauteile 31 bis 38 können verschiedene Ausgestaltungen annehmen, insbesondere Ausgestaltungen, wie sie in den beispielhaften Darstellungen der Figuren 3a bis 3c gezeigt sind.

Fig. 3a zeigt ein Schaltungsbauteil 30', welches jeweils an die Stelle eines der Schaltungsbauteile 31 bis 37 treten kann. Das Schaltungsbauteil 30' ist ein Bauteil mit einer aktiv schaltbaren Komponente 30c. Die aktiv schaltbare Komponente 30c kann ein Transistorschalter sein, beispielsweise ein Feldeffekttransistor, ein MOSFET (Metall-Oxid-Halbleiter-Feldeffekttransistor), ein IGBT (Bipolartransistor mit isolierter Gate-Elektrode), ein JFET (Sperrschicht-Feldeffekttransistor), ein BJT (Bipolartransistor), ein GTO (Gate-Abschalt-Thyristor), ein ESBT (emittergeschalteter Bipolartransistor), oder eine Siliziumcarbid-Kaskodenschaltung, eine Thyristorschaltung mit Löschthyristor oder eine ähnliche Schalteinrichtung. Es sollte dabei klar sein, dass die Art der Schalteinrichtung der aktiv schaltbaren Komponente 30c jede geeignete Schalteinrichtung umfassen kann. Im Falle, dass die aktiv schaltbare Komponente 30c beispielsweise ein selbstsperrender n-Kanal-MOSFET ist, kann der Source-Anschluss des MOSFET mit dem Anschluss 30b und der Drain-Anschluss des MOSFET mit dem Anschluss 30a verbunden sein. Das Schaltungsbauteil 30' umfasst weiterhin eine Freilaufdiode 30d sowie einen Kondensator 30e. Die Freilaufdiode 30d ist dabei anti-parallel zu der aktiv schaltbaren Komponente 30c geschaltet und der Kondensator 30e ist dabei parallel zu der aktiv schaltbaren Komponente 30c geschaltet. Der Kondensator 30e dient zur Übernahme eines Stromflusses durch das Schaltungsbauteil 30', wenn die aktiv schaltbare Komponente 30c von einem geschlossenen in einen offenen Zustand gebracht wird. Dadurch wird ein weiches An- und Abschalten des Schaltungsbauteils 30' erleichtert. Überdies kann das Schaltungsbauteil 30' die elektromagnetische Verträglichkeit mit anderen Komponenten erhöhen.

Das Schaltungsbauteil 30' umfasst einen ersten Anschluss 30a und einen zweiten Anschluss 30b. Der erste Anschluss 30a kann jeweils den nach oben weisenden Anschlüssen der Schaltungsbauteile 31 bis 37, und der zweite Anschluss 30b jeweils den nach unten weisenden Anschlüssen der Schaltungsbauteile 31 bis 37 entsprechen.

In einer Ausführungsform eines Gegentaktwandlers 4 aus Fig. 3 können die Schaltungseinrichtungen 32, 34, 35 und 37 wie das Schaltungsbauteil 30' aus Fig. 3a ausgestaltet sein. Es kann aber auch möglich sein, die Schaltungseinrichtungen 31 und 33 wie das Schaltungsbauteil 30' auszugestalten.

Fig. 3b zeigt ein Schaltungsbauteil 30", welches ebenfalls jeweils an die Stelle eines der Schaltungsbauteile 31 bis 37 treten kann. Das Schaltungsbauteil 30" unterscheidet sich von dem Schaltungsbauteil 30' aus Fig. 3a nur darin, dass der parallel geschaltete Pfad mit dem Kondensator 30e entfernt worden ist. Dadurch können Schaltungseinrichtungen, die wie das Schaltungsbauteil 30" ausgestaltet sind, nicht mehr so weich geschaltet werden wie Schaltungseinrichtungen, die wie das Schaltungsbauteil 30' ausgestaltet sind. Das Schaltungsbauteil 30" kann daher in einer Ausführungsform für diejenigen Schaltungseinrichtungen des Gegentaktwandlers 4 aus Fig. 3 vorgesehen sein, bei welchen ein hartes Schalten unkritisch ist, da beispielsweise die zum Zeitpunkt des jeweiligen Schaltens fließenden Ströme durch die Schaltungseinrichtungen gering sind. In einer Ausführungsform können die Schaltungseinrichtungen 31 und 33 des Gegentaktwandlers 4 aus Fig. 3 wie das Schaltungsbauteil 30" ausgestaltet sein.

Fig. 3c zeigt ein Schaltungsbauteil 30"', welches jeweils an die Stelle eines der Schaltungsbauteile 36 oder 38 treten kann. Das Schaltungsbauteil 30"' unterscheidet sich von dem Schaltungsbauteil 30" aus Fig. 3b nur darin, dass die aktiv schaltbare Komponente 30c entfernt worden ist. Das Schaltungsbauteil 30"' ist daher eine passive Komponente, das heißt, eine Komponente, welche nicht aktiv geschaltet werden kann.

Das Schaltungsbauteil 30"' ist daher für die Schaltungsbauteile 36 und 38 vorzusehen. Durch die Ausgestaltung der Schaltungsbauteile 36 und 38 des Gegentaktwandlers 4 in Fig. 3 wie das Schaltungsbauteil 30"' aus Fig. 3c kann ein Gegentaktwandler 4 mit einer geringeren Anzahl an aktiv schaltbaren Komponenten geschaffen werden. Dadurch verringert sich die Komplexität des für den Gegentaktwandler 4 notwendigen Ansteuerverfahrens. Der Gegentaktwandler 4 kann in diesem Fall nicht mehr bidirektional betrieben werden.

In einer Ausführungsform kann es vorgesehen sein, die Schaltungsbauteile 36 und 38 genauso wie die Schaltungseinrichtungen 31 und 33 wie das Schaltungsbauteil 30" auszugestalten. Dabei kann es vorgesehen sein, die jeweilige aktiv schaltbare Komponente 30c nicht in das Modulationsverfahren mit einzubeziehen. Durch das jeweilige permanente Öffnen bzw. Schließen der jeweiligen aktiv schaltbaren Komponenten 30c entweder der Schaltungseinrichtungen 31 und 33 oder der Schaltungsbauteile 36 und 38 kann dann eine Leistungsübertragungsrichtung des Gegentaktwandlers 4 voreingestellt werden, und der Gegentaktwandler 4 kann bidirektional betrieben werden.

Eine bevorzugte Ausführungsform des Gegentaktwandlers 4 ist schematisch in Fig. 3d dargestellt. Der Gegentaktwandler 4 in Fig. 3d ist analog zu Fig. 3 aufgebaut und weist als Schaltungseinrichtungen 31 und 33 ein Schaltungsbauteil 30" wie in Fig. 3b, als Schaltungseinrichtungen 32, 34, 35 und 37 ein Schaltungsbauteil 30' wie in Fig. 3a und als Schaltungsbauteile 36 und 38 ein Schaltungsbauteil 30"' wie in Fig. 3c auf. Es kann vorgesehen sein, dass ein Kondensator 40 parallel zu der Eingangswandlerschaltung geschaltet ist, um die Eingangsspannung 42 zu glätten, und dass ein Kondensator 41 parallel zu der Ausgangswandlerschaltung 45 geschaltet ist, um die Ausgangsspannung 43 zu glätten. Das Verhältnis der Eingangsspannung 42 zur Ausgangsspannung 43 kann dabei von einem Übersetzungsverhältnis des Transformators 39 abhängen, welches beispielsweise 1:N mit N>1 betragen kann. Dadurch kann die Ausgangsspannung 43 gegenüber der Eingangsspannung 42 hochtransformiert werden, beispielsweise kann eine Ausgangsspannung 43 etwa 250 V bis 450 V betragen. Es kann jedoch auch vorgesehen sein, das Übersetzungsverhältnis des Transformators 39 so zu wählen, dass die Ausgangsspannung 43 gegenüber der Eingangsspannung 42 heruntertransformiert wird.

Im Folgenden wird ein Modulationsverfahren zum Ansteuern eines Gegentaktwandlers 4 aus Fig. 3d beschrieben. Dazu wird der Transformator 39 nur durch seine Streuinduktivität dargestellt, also durch den Teil der Induktivität, welcher nicht zur idealen Leistungsübertragung des Transformators 39 beiträgt.

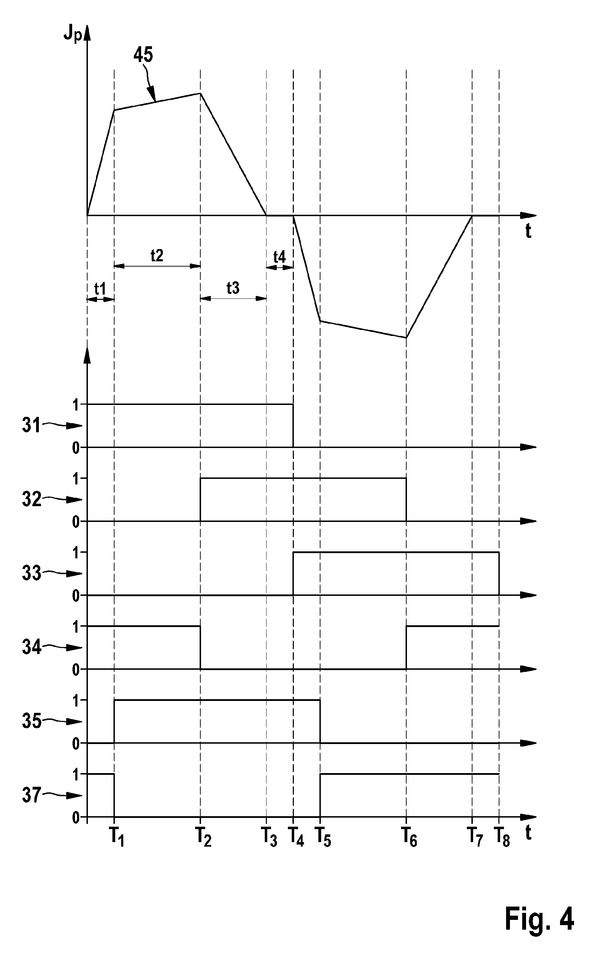

Fig. 4 zeigt ein zeitliches Verlaufsdiagramm von Ansteuersignalen eines Modulationsverfahrens zum Ansteuern eines Gegentaktwandlers, beispielsweise des Gegentaktwandlers 4 aus Fig. 3d. Gezeigt werden im obersten Diagramm der zeitliche Verlauf 45 des Stroms $I_p$ durch die primärseitige Wicklung des Transformators 39 während eines Durchlaufs durch einen Modulationszyklus. Dabei wird der Magnetisierungsstrom in der Betrachtung des Stroms $I_p$ im Folgenden nicht berücksichtigt. Der Modulationszyklus umfasst dabei die Zeitspanne zwischen dem (beliebig gewählten) Nullpunkt

und dem Zeitpunkt $\tau_8$. Nach dem Zeitpunkt $\tau_8$ kann der Modulationszyklus entsprechend des in Fig. 4 dargestellten zeitlichen Verlaufs wiederholt werden, wobei der Zeitpunkt $\tau_8$ in diesem Fall den Nullpunkt des nachfolgenden Modulationszyklus darstellt.

Der Modulationszyklus umfasst verschiedene Modulationsphasen, deren Anfangs- und Endzeitpunkte jeweils mit einem der Zeitpunkte $\tau_1$ bis $\tau_8$ zusammenfallen. Unter dem Stromdiagramm sind jeweils Ansteuersignale für die Schaltungsbauteile 31 bis 35 und 37 dargestellt, welche entsprechend der gestrichelten Linien mit den zugehörigen Zeitpunkten $\tau_1$ bis $\tau_8$ korrelieren. Die Ansteuersignale sind mit dem Wert 1 für einen geschlossenen Zustand der jeweils zugehörigen aktiv schaltbaren Komponente und mit dem Wert 0 für einen offenen Zustand der jeweils zugehörigen aktiv schaltbaren Komponente dargestellt. Die aktiv schaltbaren Komponenten werden im Folgenden der Übersichtlichkeit halber jeweils mit Schalter bezeichnet.

In einem ersten Zeitabschnitt t1 des Modulationszyklus wird eine positive Spannung an die primärseitige Wicklung des Transformators 39 angelegt. Dabei sind primärseitig die Schalter 31 und 34 geschlossen. Dadurch, dass der Schalter 37 auf der Sekundärseite geschlossen ist, stellt sich ein Stromfluss durch die Schaltungsbauteile 37 und 38 ein. Damit ist die sekundärseitige Wicklung des Transformators 39 kurzgeschlossen. Die Streuinduktivität des Transformators 39 wird in diesem Zeitabschnitt mit der positiven Spannung aufmagnetisiert und es findet kein Leistungsübertrag statt. Dies ermöglicht einen steilen Anstieg des Stroms $I_p$ in der primärseitigen Wicklung des Transformators 39 und damit ein schnelles Erreichen des Anfangsstromwertes für den Zeitabschnitt t2.

Zum Zeitpunkt $\tau_1$ wird der Schalter 37 auf der Sekundärseite geöffnet. Der Ausschaltvorgang kann dabei weich ablaufen, wenn dem Schalter 37 ein Kondensator parallel geschaltet ist. Nach Ablauf einer kurzen Totzeit für den Abschaltvorgang wird die anti-parallel geschaltete Freilaufdiode des Schalters 35 leitfähig und der Schalter 35 kann weich eingeschaltet werden. Dadurch wird die sekundärseitige Wicklung des Transformators 39 zwischen die Ausgänge der Ausgangswandlerschaltung 45 geschaltet und es liegt die Ausgangsspannung zwischen Eingang und Ausgang der Streuinduktivität des Transformators 39 an. Je nach Übersetzungsverhältnis des Transformators steigt der Strom $I_p$ in der primärseitigen Wicklung des Transformators 39 leicht an oder nimmt leicht ab. In dem Zeitabschnitt t2 zwischen den Zeitpunkten $\tau_1$ und $\tau_2$ findet ein Leistungsübertrag zwischen Eingangs- und Ausgangswandlerschaltung 44 bzw. 45 statt. Für einen effizienten Betrieb mit hohem Leistungsübertrag ist der Zeitabschnitt t2 dementsprechend möglichst lang zu wählen.

Zum Zeitpunkt $\tau_2$ wird primärseitig der Schalter 34 abgeschaltet, wiederum über einen Kondensator weichgeschaltet. Der Strom $I_p$ kommutiert dadurch auf die Freilaufdiode der Schalteinrichtung 32. Nach einer Totzeit zum Abschalten des Schalters 34 wird der Schalter 32 weich zugeschaltet. In einem auf den Zeitpunkt $\tau_2$ folgenden Zeitabschnitt t3 erfolgt ein Absinken des Stroms $I_p$ in Abhängigkeit von der Größe der Ausgangsspannung.

Zum Zeitpunkt $\tau_3$ ist der Strom $I_p$ auf Null abgesunken und wird kurz darauf minimal negativ. Die Diode des Schaltungsbauteils 38 verhindert eine sekundärseitige Umkehr der Stromrichtung, wodurch die Diode des Schaltungsbauteils 36 leitfähig wird. In dem Zeitabschnitt t4 zwischen den Zeitpunkten $\tau_3$ und $\tau_4$ findet kein Leistungsübertrag statt. Wenn beispielsweise ein maximaler Leistungsübertrag gewünscht wird, ist die Länge des Zeitabschnitts t4 vorzugsweise so gering wie möglich einzustellen. Es kann jedoch möglich sein, den Zeitabschnitt t4 auf eine vorbestimmte Zeitspanne auszudehnen und den Beginn des zweiten Halbzyklus zum Zeitpunkt $\tau_4$ zu verzögern. Auf diese Weise kann nur eine geringe Leistung übertragen werden, beispielsweise in einem Teillastbetrieb des Gegentaktwandlers 4. Der Zeitabschnitt t4 kann dabei prinzipiell beliebig lange ausgedehnt werden, ohne dass die entsprechenden Schaltungsbauteile ihre weichschaltenden Eigenschaften verlieren.

Zum Zeitpunkt $\tau_4$ beginnt der zweite Halbzyklus des Modulationsverfahrens. Zunächst wird dazu der Schalter 31 geöffnet und der Schalter 33 geschlossen. Dadurch, dass die Schalter 31 und 33 in der Ausführungsform des Gegentaktwandlers 4 in Fig. 3d keine parallel geschalteten Kondensatoren aufweisen, erfolgen diese beiden Schaltvorgänge hart. Allerdings ist der Stromfluss im Zeitabschnitt t4 nur minimal, so dass dadurch kaum Schaltverluste auftreten können. Sekundärseitig fließt dann der Strom durch die Schalteinrichtung 35 und die Diode des Schaltungsbauteils 36. Der Zeitabschnitt zwischen den Zeitpunkten $\tau_4$ und $\tau_5$ entspricht somit vom Verlauf her dem Zeitabschnitt t1, mit dem Unterschied, dass der Strom $I_p$ nun in die entgegengesetzte Richtung fließt.

Zum Zeitpunkt $\tau_5$ erfolgt analog zum Zeitpunkt $\tau_1$ ein weiches Schalten der Schalter 35 und 37, wodurch wieder eine Plateauphase des Leistungsübertrags eingeleitet wird. Zum Zeitpunkt $\tau_6$ wird analog zum Zeitpunkt $\tau_2$ der Schalter 32 weich ausgeschaltet und der Schalter 34 weich eingeschaltet. Analog zum Zeitpunkt $\tau_3$ erreicht der Strom $I_p$ zum Zeitpunkt $\tau_7$ wieder einen Nulldurchgang und analog zum Zeitabschnitt t4 kann eine Totzeit bis zum Zeitpunkt $\tau_8$ eingehalten werden, in der der sekundärseitige Strom selbstständig auf die Diode des Schaltungsbauteils 38 kommutiert. Zum Zeitpunkt $\tau_8$ ist damit ein vollständiger Modulationszyklus des Modulationsverfahrens abgeschlossen.

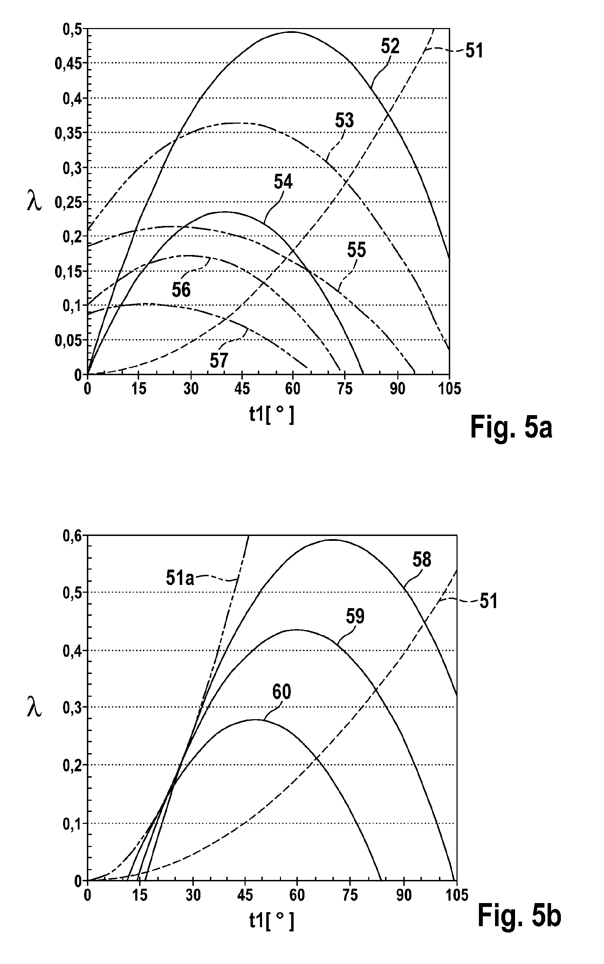

Fig. 5a zeigt den Verlauf der anteilig übertragenen Leistung $\lambda$ als Verhältnis zwischen Ausgangsleistung $P_{aus}$ und einer normierten, von der Eingangsspannung und der Streuinduktivität des Transformators 39 abhängigen Leistung $P_{norm}$. Die Eingangsleistung $P_{norm}$ ist dabei gegeben durch

$$P_{norm} = U_{ein} * I_{ein} = U_{ein}^2 * X_L^{-1} = U_{ein}^2 * (\omega L)^{-1},$$

wobei $U_{ein}$ die Eingangsspannung, w die Modulationskreisfrequenz und L die Streuinduktivität des Transformators 39 darstellt. Die anteilig übertragene Leistung λ wird dabei gegenüber der Länge des Zeitabschnitts t1 aufgetragen, wobei die Länge des Zeitabschnitts t1 in Gradeinheiten des Modulationszyklus angegeben ist. 180° entsprechen damit der Summe der Zeitabschnitte t1, t2, t3 und t4 des ersten Halbzyklus des Modulationszyklus aus Fig. 4.

Gezeigt sind sechs verschiedene Leistungsübertragsverläufe 52, 53, 54, 55, 56 und 57, jeweils in Abhängigkeit von der Spannungsübersetzung d der erfindungsgemäßen Topologie und einer Länge des Zeitabschnitts t4. Dabei zeigt die Kurve 52 den Leistungsübertrag bei einer Spannungsübersetzung von d = 1 und einer Länge des Zeitabschnitts t4 von 5°, die Kurve 53 den Leistungsübertrag bei einer Spannungsübersetzung von d = 0,75 und einer Länge des Zeitabschnitts t4 von 5°, die Kurve 54 den Leistungsübertrag bei einer Spannungsübersetzung von d = 1 und einer Länge des Zeitabschnitts t4 von 60°, die Kurve 55 den Leistungsübertrag bei einer Spannungsübersetzung von d = 0,75 und einer Länge des Zeitabschnitts t4 von 60°, die Kurve 56 den Leistungsübertrag bei einer Spannungsübersetzung von d = 0,5 und einer Länge des Zeitabschnitts t4 von 5°, und die Kurve 57 den Leistungsübertrag bei einer Spannungsübersetzung von d = 0,5 und einer Länge des Zeitabschnitts t4 von 60°.

Zunächst lässt sich erkennen, dass bei einer Verlängerung des Zeitabschnitts t4 der effektive Leistungsübertrag λ abnimmt. Daher kann es prinzipiell möglich sein, den effektiven Leistungsübertrag λ über die Länge des Zeitabschnitts t4, das heißt, über die Länge der Totzeit zwischen zwei Trapezhalbzyklen des Modulationszyklus zu steuern. Es ist vorteilhafterweise aber auch möglich, bei vorgegebener (minimaler) Länge des Zeitabschnitts t4 die Länge des Zeitabschnitts t1 einzustellen. Aufgrund der Parabelform der Kurven 52 bis 57 ergeben sich daher für jeden einzustellenden effektiven Leistungsübertrag λ zwei einstellbare Arbeitspunkte. Beispielsweise sind für die Kurve 52 bei einem gewünschten Leistungsübertrag λ von 0,4 mögliche Arbeitspunkte für den Zeitabschnitt t1 etwa 32° und etwa 85°, wie sich aus Fig. 5a ergibt. Dabei ist es vorteilhaft, wenn der Arbeitspunkt mit dem kürzeren Zeitabschnitt t1 gewählt wird - im Beispiel also etwa 32° -, da in diesem Fall die Leitverluste aufgrund geringerer Stromflüsse ebenfalls geringer sind.

Es ist jedoch zu beachten, dass bei Verlängerung der Dauer des Zeitabschnitts t1 der Zeitabschnitt t3, welcher zum Abbau des Stromflusses durch die primärseitige Wicklung des Transformators benötigt wird, ebenfalls verlängert wird. Ab einer gewissen Länge des Zeitabschnitts t1 ist damit die Summe der Zeitdauern t1 und t3 bereits genauso groß wie die Länge eines Modulationshalbzyklus abzüglich der (minimalen) Totzeitdauer t4. In diesem Fall verringert sich die Länge des Zeitabschnitts t2, also die Dauer während eines Modulationshalbzyklus, während der direkter Leistungsübertrag zwischen den Wicklungen des Transformators stattfinden kann, auf Null. Die Ortskurve dieser Punkte ist als Kurve 51 in dem Diagramm in Fig. 5a eingezeichnet. Mit anderen Worten, rechts der Kurve 51 liegen für jeden gegebenen Leistungsübertrag λ diejenigen Dauern der Zeitabschnitte t1, für die kein direkter Leistungsübertrag mehr stattfinden kann. Wenn man als Arbeitspunkt aber jeweils die geringere Dauer des Zeitabschnitts t1 wählt, ist stets ein direkter und damit effizienter Leistungsübertrag gewährleistet.

Fig. 5b zeigt den Verlauf der anteilig übertragenen Leistung λ als Verhältnis zwischen Ausgangsleistung $P_{aus}$ und Eingangsleistung $P_{norm}$ für Spannungsverhältnis größer als 1, also für ein Hochsetzen der Eingangsspannung in eine höhere Ausgangsspannung in dem Gegentaktwandler 4 aus Fig. 3d. Das Diagramm zeigt drei verschiedene Leistungsübertragsverläufe 58, 59 und 60, jeweils in Abhängigkeit von der Spannungsübersetzung d des Transformators und einer Länge des Zeitabschnitts t4. Dabei zeigt die Kurve 58 den Leistungsübertrag bei einer Spannungsübersetzung von d = 1,2 und einer Länge des Zeitabschnitts t4 von 5°, die Kurve 59 den Leistungsübertrag bei einer Spannungsübersetzung von d = 1,2 und einer Länge des Zeitabschnitts t4 von 30°, und die Kurve 60 den Leistungsübertrag bei einer Spannungsübersetzung von d = 1,2 und einer Länge des Zeitabschnitts t4 von 60°. Die anteilig übertragene Leistung λ wird dabei ähnlich wie in Fig. 5a gegenüber der Länge des Zeitabschnitts t1 in Grad aufgetragen.

Neben der bereits in Bezug auf Fig. 5a erläuterten Kurve 51, rechts von welcher für jeden gegebenen Leistungsübertrag λ diejenigen Dauern der Zeitabschnitte t1 liegen, für die kein direkter Leistungsübertrag mehr stattfinden kann, ist in Fig. 5b die Kurve 51a gezeigt. Die Kurve 51a tangiert jede der Kurven 58, 59 und 60 in einem Punkt, welcher jeweils einer minimalen Dauer des Zeitabschnitts t1 entspricht, unterhalb derer die Dauer des Zeitabschnitts t3 Null wird, da der Stromflussabfall während der Leistungsübertragungsphase des Zeitabschnitts t2 bereits ausreicht, um den Stromfluss auf Null zu bringen. Damit wird das Trapezmodulationsverfahren für eine zu geringe Wahl der Dauer des Zeitabschnitts t1 effektiv zu einem Dreiecksmodulationsverfahren. Dies birgt zwar für die Schaltungsbauteile des Gegentaktwandlers keine Gefahren, ist aber mit weniger günstigen Strom-Effektivwerten verbunden als ein echtes Trapezmodulationsverfahren.

**Patentansprüche**

1. Gegentaktwandler (4), mit:

   einer primärseitigen Eingangswandlerschaltung (44) mit einer Vielzahl von primärseitigen Schalteinrichtungen (31, 32, 33, 34) in einer Vollbrückenschaltung, welche dazu ausgelegt ist, eine Eingangsgleichspannung (42) in eine erste Wechselspannung umzusetzen;
   einem Transformator (39) mit einer primärseitigen Wicklung und einer sekundärseitigen Wicklung, welcher dazu ausgelegt ist, die erste Wechselspannung an der primärseitigen Wicklung zu empfangen und eine zweite Wechselspannung an der sekundärseitigen Wicklung zu erzeugen; und
   einer sekundärseitigen Ausgangswandlerschaltung (45), welche dazu ausgelegt ist, die zweite Wechselspannung in eine Ausgangsgleichspannung (43) umzusetzen, mit einer ersten Halbbrückenschaltung, welche eine erste sekundärseitige Schalteinrichtung (35), eine zweite sekundärseitige Schalteinrichtung (37) und einen ersten Mittelabgriff, welcher mit einem ersten Anschluss der sekundärseitigen Wicklung verbunden ist, umfasst, und einer zweiten Halbbrückenschaltung, welche eine erste sekundärseitige Diode (36), eine zweite sekundärseitige Diode (38) und einen zweiten Mittelabgriff, welcher mit einem zweiten Anschluss der sekundärseitigen Wicklung verbunden ist, umfasst,
   **dadurch gekennzeichnet, dass** die zweite Halbbrückenschaltung keine schaltbare Komponente umfasst.

2. Gegentaktwandler (4) nach Anspruch 1, wobei die primärseitigen Schalteinrichtungen (31, 32, 33, 34), die erste sekundärseitigen Schalteinrichtung (36) und die zweite sekundärseitige Schalteinrichtung (38) MOSFETs (30c), IGBTs (30c), JFETs (30c), BJTs (30c), GTOs (30c), ESBTs (30c), SiC-Kaskoden (30c) oder Thyristorschaltungen mit Löschthyristoren (30c) umfassen.

3. Gegentaktwandler (4) nach Anspruch 2, wobei einer oder mehrerer der primärseitigen Schalteinrichtungen (31, 32, 33, 34), der ersten sekundärseitigen Schalteinrichtung (36) und/oder der zweiten sekundärseitigen Schalteinrichtung (38) jeweils ein Kondensator (30e) parallel geschaltet ist.

4. Gegentaktwandler (4) nach Anspruch 2 oder 3, wobei den primärseitigen Schalteinrichtungen (31, 32, 33, 34), der ersten sekundärseitigen Schalteinrichtung (36) und/oder der zweiten sekundärseitigen Schalteinrichtung (38) jeweils eine Diode (30d) anti-parallel geschaltet ist.

5. Modulationsverfahren zum Ansteuern eines Gegentaktwandlers (4) nach einem der vorhergehenden Ansprüche, mit den Schritten:

   Anlegen einer primärseitigen positiven Spannung an die primärseitige Wicklung des Transformators (39) bei gleichzeitigem Kurzschließen der sekundärseitigen Wicklung über die zweite sekundärseitige Schalteinrichtung (37) und die zweite sekundärseitige Diode (38) während eines ersten Zeitabschnitts (t1) eines Modulationszyklus;
   Öffnen der zweiten sekundärseitigen Schalteinrichtung (37) und Schließen der ersten sekundärseitigen Schalteinrichtung (35) zum Übertragen von Leistung von der Eingangswandlerschaltung (44) in die Ausgangswandlerschaltung (45) während eines zweiten Zeitabschnitts (t2) des Modulationszyklus;
   Kurzschließen der primärseitigen Wicklung während eines dritten Zeitabschnitts (t3) des Modulationszyklus; und
   Anlegen einer primärseitigen negativen Spannung an die primärseitige Wicklung des Transformators (39), nachdem der um den Magnetisierungsstrom bereinigte Stromfluss ($I_p$) durch die primärseitige Wicklung des Transformators (39) die Fließrichtung umkehrt.

6. Modulationsverfahren nach Anspruch 5, weiterhin mit den Schritten:

   Anlegen der primärseitigen negativen Spannung an die primärseitige Wicklung des Transformators (39) bei gleichzeitigem Kurzschließen der sekundärseitigen Wicklung über die erste sekundärseitige Schalteinrichtung (35) und die erste sekundärseitige Diode (36) während eines vierten Zeitabschnitts des Modulationszyklus;
   Öffnen der ersten sekundärseitigen Schalteinrichtung (35) und Schließen der zweiten sekundärseitigen Schalteinrichtung (37) zum Übertragen von Leistung von der Eingangswandlerschaltung (44) in die Ausgangswandlerschaltung (45) während eines fünften Zeitabschnitts des Modulationszyklus;
   Kurzschließen der primärseitigen Wicklung während eines sechsten Zeitabschnitts des Modulationszyklus; und
   Anlegen einer primärseitigen positiven Spannung an die primärseitige Wicklung des Transformators (39), nachdem der um den Magnetisierungsstrom bereinigte Stromfluss ($I_p$) durch die primärseitige Wicklung des Transformators (39) die Fließrichtung umkehrt.

7. Modulationsverfahren nach Anspruch 6, wobei der Schritt des Anlegens der primärseitigen negativen Spannung um eine vorbestimmte Zeitspanne (t4), nachdem der um den Magnetisierungsstrom bereinigte Stromfluss ($I_p$) durch die primärseitige Wicklung des Transformators (39) die Fließrichtung umkehrt, verzögert wird.

## Claims

1. Push-pull converter (4), comprising:

   a primary-side input converter circuit (44) comprising a multiplicity of primary-side switching devices (31, 32, 33, 34) in a full-bridge circuit, which is configured to convert a DC input voltage (42) into a first AC voltage;
   a transformer (39) comprising a primary-side winding and a secondary-side winding, which transformer is configured to receive the first AC voltage on the primary-side winding and to generate a second AC voltage on the secondary-side winding; and
   a secondary-side output converter circuit (45) which is configured to convert the second AC voltage into a DC output voltage (43), comprising a first half-bridge circuit, which comprises a first secondary-side switching device (35), a second secondary-side switching device (37) and a first centre tap, which is connected to a first connection of the secondary-side winding, and a second half-bridge circuit, which comprises a first secondary-side diode (36), a second secondary-side diode (38) and a second centre tap, which is connected to a second connection of the secondary-side winding,
   **characterized in that**
   the second half-bridge circuit does not comprise any switchable components.

2. Push-pull converter (4) according to Claim 1, wherein the primary-side switching devices (31, 32, 33, 34), the first secondary-side switching device (36) and the second secondary-side switching device (38) comprise MOSFETs (30c), IGBTs (30c), JFETs (30c), BJTs (30c), GTOs (30c), ESBTs (30c), SiC cascades (30c) or thyristor circuits comprising turn-off thyristors (30c).

3. Push-pull converter (4) according to Claim 2, wherein in each case one capacitor (30e) is connected in parallel with one or more of the primary-side switching devices (31, 32, 33, 34), the first secondary-side switching device (36) and/or the second secondary-side switching device (38).

4. Push-pull converter (4) according to Claim 2 or 3, wherein in each case one diode (30d) is connected antiparallel with the primary-side switching devices (31, 32, 33, 34), the first secondary-side switching device (36) and/or the second secondary-side switching device (38).

5. Modulation method for actuating a push-pull converter (4) according to one of the preceding claims, comprising the following steps:

   applying a primary-side positive voltage to the primary-side winding of the transformer (39) with simultaneous short-circuiting of the secondary-side winding via the second secondary-side switching device (37) and the second secondary-side diode (38) during a first time segment (t1) of a modulation cycle;
   opening the second secondary-side switching device (37) and closing the first secondary-side switching device (35) for transmitting power from the input converter circuit (44) into the output converter circuit (45) during a second time segment (t2) of the modulation cycle;
   short-circuiting the primary-side winding during a third time segment (t3) of the modulation cycle; and
   applying a primary-side negative voltage to the primary-side winding of the transformer (39) once the current flow ($I_p$), adjusted by the magnetization current, through the primary-side winding of the transformer (39) reverses the direction of flow.

6. Modulation method according to Claim 5, further comprising the following steps:

   applying the primary-side negative voltage to the primary-side winding of the transformer (39) with simultaneous short-circuiting of the secondary-side winding via the first secondary-side switching device (35) and the first secondary-side diode (36) during a fourth time segment of the modulation cycle;
   opening the first secondary-side switching device (35) and closing the second secondary-side switching device (37) in order to transmit power from the input converter circuit (44) into the output converter circuit (45) during a fifth time segment of the modulation cycle;

short-circuiting the primary-side winding during a sixth time segment of the modulation cycle; and

applying a primary-side positive voltage to the primary-side winding of the transformer (39) once the current flow ($I_p$), adjusted by the magnetization current, through the primary-side winding of the transformer (39) reverses the direction of flow.

**7.** Modulation method according to Claim 6, wherein the step of applying the primary-side negative voltage is delayed by a predetermined time span (t4) once the current flow ($I_p$), adjusted by the magnetization current, through the primary-side winding of the transformer (39) reverses the direction of flow.

**Revendications**

**1.** Convertisseur symétrique (4) présentant :

un circuit primaire (44) d'entrée de convertisseur qui présente plusieurs dispositifs primaires de commutation (31, 32, 33, 34) raccordés en pont entier et conçus pour convertir une tension continue d'entrée (42) en une première tension alternative,

un transformateur (39) doté d'un enroulement primaire et d'un enroulement secondaire et conçu pour recevoir la première tension alternative sur l'enroulement primaire et former une deuxième tension alternative sur l'enroulement secondaire et

un circuit secondaire (45) de sortie de convertisseur conçu pour convertir la deuxième tension alternative en une tension continue de sortie (43) et présentant un premier circuit en demi-pont qui comporte un premier dispositif secondaire de commutation (35), un deuxième dispositif secondaire de commutation (37) et une première borne de prélèvement central raccordée à une première borne de l'enroulement secondaire ainsi qu'un deuxième circuit en demi-pont qui comporte une première diode secondaire (36), une deuxième diode secondaire (38) et une deuxième borne de prélèvement central raccordée à une deuxième borne de l'enroulement secondaire,

**caractérisé en ce que**

le deuxième circuit en demi-pont ne comporte aucun composant commutable.

**2.** Convertisseur symétrique (4) selon la revendication 1, dans lequel les dispositifs de commutation primaires (31, 32, 33, 34), le premier dispositif de commutation secondaire (36) et le deuxième dispositif de commutation secondaire (38) comprennent des MOSFET (30c), des IGBT (30c), des JFET (30c), des BJT (30c), des GTO (30c), des ESBT (30c), des kascodes SiC (30c) ou des circuits à thyristor dotés de thyristors d'extinction (30c).

**3.** Convertisseur symétrique (4) selon la revendication 2, dans lequel un condensateur (30e) est raccordé en parallèle à un ou plusieurs des dispositifs de commutation primaires (31, 32, 33, 34), au premier dispositif de commutation secondaire (36) et/ou au deuxième dispositif de commutation secondaire (38).

**4.** Convertisseur symétrique (4) selon les revendications 2 ou 3, dans lequel une diode (30d) est raccordée en position antiparallèle aux dispositifs de commutation primaires (31, 32, 33, 34), au premier dispositif de commutation secondaire (36) et/ou au deuxième dispositif de commutation secondaire (38).

**5.** Procédé de modulation prévu pour commander un convertisseur symétrique (4) selon l'une des revendications précédentes, le procédé présentant les étapes qui consistent à :

appliquer une tension primaire positive sur l'enroulement primaire du transformateur (39) tout en mettant en court-circuit l'enroulement secondaire par l'intermédiaire du deuxième dispositif de commutation secondaire (37) et de la deuxième diode secondaire (38) pendant une première partie (t1) de la durée d'un cycle de modulation, ouvrir le deuxième dispositif de commutation secondaire (37) et fermer le premier dispositif de commutation secondaire (35) pour transférer la puissance du circuit (44) d'entrée de convertisseur dans le circuit (45) de sortie de convertisseur pendant une deuxième partie (t2) de la durée du cycle de modulation,

mettre en court-circuit l'enroulement primaire pendant une troisième partie (t3) de la durée du cycle de modulation et

appliquer une tension négative primaire sur l'enroulement primaire du transformateur (39) après que l'écoulement de courant ($I_p$) débarrassé du courant de magnétisation et traversant l'enroulement primaire du transformateur (39) a changé de sens d'écoulement.

6. Procédé de modulation selon la revendication 5, comportant en outre les étapes qui consistent à :

appliquer la tension négative primaire sur l'enroulement primaire du transformateur (39) tout en mettant en court-circuit l'enroulement secondaire par l'intermédiaire du premier dispositif de commutation secondaire (35) et de la première diode secondaire (36) pendant une quatrième partie de la durée du cycle de modulation,
ouvrir le premier dispositif de commutation secondaire (35) et fermer le deuxième dispositif de commutation secondaire (37) pour transmettre la puissance du circuit (44) d'entrée de convertisseur en le circuit (45) de sortie de convertisseur pendant une cinquième partie de la durée du cycle de modulation,
mettre en court-circuit l'enroulement primaire pendant une sixième partie de la durée du cycle de modulation et appliquer une tension positive primaire sur l'enroulement primaire du transformateur (39) après que le courant ($I_p$) débarrassé du courant de magnétisation et traversant l'enroulement primaire du transformateur (39) a changé de sens d'écoulement.

7. Procédé de modulation selon la revendication 6, dans lequel l'étape d'application de la tension négative primaire est retardée d'une durée (t4) prédéterminée après que le courant ($I_p$) débarrassé du courant de magnétisation et traversant l'enroulement primaire du transformateur (39) a changé de sens d'écoulement.

Fig. 1

Fig. 2

**Fig. 3**

**Fig. 3a**

**Fig. 3b**

**Fig. 3c**

Fig. 3d

Fig. 4

Fig. 5a

Fig. 5b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6452815 B1

**In der Beschreibung aufgeführte Nicht-Patentliteratur**

- **KRISMER, F. ; ROUND, S. ; KOLAR, J. W.** Performance Optimization of a High Current Dual Active Bridge with a Wide Operating Voltage Range. *Proceedings of the 37th Power Electronics Specialists Conference, Jeju, Korea,* 18. Juni 2006

- **KRISMER, F. ; BIELA, J. ; KOLAR, J. W.** A Comparative Evaluation of Isolated Bi-directional DC/DC Converters with Wide Input and Output Voltage Range. *Conference Record of the 2005 IEEE Industry Applications Conference, 40th IAS Annual Meeting (IAS'05), Hong Kong,* 02. Oktober 2005